# EUROPEAN PATENT SPECIFICATION

(11) **EP 2 074 744 B1**
(45) Date of publication and mention of the grant of the patent: **30.08.2017**
(21) Application number: 07820773.5
(22) Date of filing: 01.10.2007
(51) Int. Cl.: H04W 72/00, H04L 12/18

(54) **A COUNTING METHOD AND NETWORK CONTROL DEVICE**
ZÄHLVERFAHREN UND NETZWERKSTEUEREINRICHTUNG
PROCÉDÉ DE COMPTAGE ET DISPOSITIF DE COMMANDE DE RÉSEAU

(30) Priority: 30.09.2006 CN 200610141585
(43) Date of publication of application: 01.07.2009
(73) Proprietor: Nokia Solutions and Networks GmbH & Co. KG, 81541 Munich (DE)
(72) Inventor: HE, Jing, Beijing 100102 (CN)
(74) Representative: Nokia Corporation
(86) International application number: PCT/EP2007/060389
(87) International publication number: WO 2008/037810

(56) References cited:
- WO-A1-2006/034656
- US-A1- 2004 116 125
- US-A1- 2006 094 408
- "Universal Mobile Telecommunications System (UMTS); Introduction of the Multimedia Broadcast/Multicast Service (MBMS) in the Radio Access Network (RAN); Stage 2 (3GPP TS 25.346 version 6.8.0 Release 6); ETSI TS 125 346" ETSI STANDARDS, EUROPEAN TELECOMMUNICATIONS STANDARDS INSTITUTE, SOPHIA-ANTIPO, FR, vol. 3-R2, no. V680, June 2006 (2006-06), XP014034303 ISSN: 0000-0001

## Description

### Technical field

The present invention involves multimedia broadcast multicast service (MBMS) technology, especially the counting method and network control devices used for counting in MBMS.

### Technical background

With the rapid development of mobile communication technology, mobile communication networks are being extensively used and the number of mobile communication users is increasing sharply, and MBMS technology is appearing on mobile communication networks. As this technology is characterized by its low resource usage and high performance, has made it a crucial technology in mobile communication systems.

Networks can use a peer to peer (PTP) pattern or a peer to multi peer (PTM) pattern to transmit MBMS service data to multiple users within a cell. If a relatively small number of users accept MBMS service in a cell, the PTP mode will be used; the network side will then transmit MBMS service data to user equipment (UE) used by corresponding users through various dedicated traffic channels (DTCH) . When there are a relatively large number of users in the cell, the PTM mode will be used; the network side will then transmit MBMS service data to all users involved in the MBMS service or users showing an interest in MBMS service by use of the MBMS MTCH. Adjusting the transmission mode not only allows a saving in radio resources for the air interface, but the transmission power of base stations can also be reduced.

To verify whether the PTP mode or the PTM mode should be used in a cell, the number of UE in the cell is usually obtained, with the radio network controller (RNC) initiating the primary counting and recounting processes. As prescribed in the protocol, when an MBMS service session is initiated, the RNC will count the number of UE accepting MBMS service in the cell by use of the primary counting process. During such a MBMS service session, RNC will count the number of UE accepting MBMS service in a cell once again by performing the counting process once again if it is necessary to count the number of UE once again. During a MBMS service session, the recount may be performed numerous times.

In current counting methods, a pre-determined time section and a threshold for the setup of PTM are set, and the number of UE in the cell is counted in the pre-set time section, i.e. the primary count and recount are performed. Where the number of UE in the cell is less than the threshold for the setup of PTM, a recount can only be triggered when the pre-set time section has ended. Where such a method is used to trigger recounting, it is necessary to wait for the end of the pre-set time section after counting the number of UE; only then can it be determined whether a recount need be triggered. As the mobility, activation and de-activation of UE are highly random, it is possible for the number of UE in the cell to change greatly within a short period of time. It is obviously impossible for a counting method which uses regular recount triggering to give an accurate number of users accepting MBMS service in a timely manner; it is thus impossible for the network side to determine accurately which transmission mode is currently the best choice. As a result, radio resources are wasted.

WO 2006/034656 discloses a recounting method in an MBMS Service for recounting the number of UEs. The recounting procedure is introduced because it is necessary to recount the users during the MBMS session so as to determine whether the PTM transmission mode is still the currently suitable bearer mode.

### Content of the invention

The present invention provides a counting method which can make the network side's determination of transmission modes for MBMS service more accurate.

In the counting method based on the present invention, a user equipment (UE) information record and a user number threshold in a cell are pre-established. The method further consists of:
A. informing UE in the cell where multimedia broadcast and multicast service (MBMS) is transmitted of the initiation of the count, receiving a response from the UE, and recording the responding UE in a UE information record;
B. monitoring the cell and updating the UE information record when it is determined that a UE with variant communication behavior has appeared in the cell;
C. determining whether to trigger a recount or not according to the number of UE in the UE information record and the user number threshold in the cell; if this is required, Step A is repeated; otherwise, Step B is repeated.

Step A, where the responding UE are recorded in the UE information record, preferably consists of:

The channel state of the responding UE is determined; if the UE is in a universal mobile telecommunication system (UMTS) universal terrestrial radio access network (UTRAN) registration area paging channel (URA_PCH), in a cell paging channel (CELL_PCH) or in a cell forward access channel (CELL FACH), an identifier is allocated to the UE; if the UE is in a cell dedicated channel, the identifier corresponding to the UE is acquired externally and allocated;

The identifier for the responding UE will be used as UE information and recorded in the said UE information record.

Prior to recording the identifier of the responding UE in the UE information record as the UE information, this should preferably further comprise:
It should be determined whether an identifier for the UE exists in the UE information record or not; if this exists, Step B should be performed; otherwise, the operation to record the identification into the UE information record should be performed.

In Step A, where UE in the cell where the MBMS is transmitted are informed of the initiation of a count, the cell should preferably use a peer to multi peer (PTM) transmission mode; accordingly, Step B, of updating the UE information record when the existence of a UE with variant communication behavior is determined, comprises:
B11. It should be determined whether the UE is already participating in the MBMS service and enters the cell, is powered on or enters the service area, or whether the UE is accessing the MBMS service; if so, the existence of a UE with variant communication behavior is determined, and the information for the UE is added to the UE information record, and Step B12 is then performed; otherwise, Step B12 should be performed directly;
B12. It should be determined whether the UE in the cell stored in the UE information record has left the cell, is powered off or has left the service area, or whether the UE has quit the MBMS service; if so, the existence of a UE with variant communication behavior in the cell is determined, and the information of the UE is deleted from the UE information record; otherwise, it is determined that no UE display variant communication behavior in the cell.

Step C, of determining whether to trigger a recount or not according to the UE number and the user number threshold in the cell in the UE information record, preferably comprises:
It should be determined whether the UE number in the UE information record is smaller than the user number threshold in the cell; if so, a recount should be triggered; otherwise, a recount should not be triggered.

In Step A, where UE in the cell where the MBMS is transmitted are informed of the initiation of a count, the cell should preferably use a peer to multi peer (PTM) transmission mode; accordingly, Step B, where the UE information record is updated when the existence of a UE with variant communication behavior is determined, comprises:
B21. It should be determined whether the UE in the cell stored in the UE information record has left the cell, is powered off or has left the service area, or whether the UE has quit the MBMS service; if so, the existence of a UE with variant communication behavior in the cell is determined, and the information of the UE is deleted from the UE information record, and Step B22 is then performed; otherwise, Step B22 should be performed directly.
B22. It should be determined whether the UE is already participating in the MBMS service and enters the cell, is powered on or enters the service area, or whether the UE is accessing the MBMS service; if so, the existence of a UE with variant communication behavior is determined, and the information for the UE is added to the UE information record; otherwise, it is determined that no UE with variant communication behavior exist in the cell.

Wherein, Step C, where it is determined whether a recount should be triggered or not according to the UE number and the user number threshold in the cell in the UE information record, comprises:
It is determined whether the UE number in the UE information record is smaller than the user number threshold in the cell; if so, a recount should be triggered; otherwise, a recount should not be triggered.

Preferably, the step of adding the information of the UE into the UE information record comprises: adding the information of the UE into the UE information record as a new item, and adding 1 to the number of UE in the UE information record or replacing a UE information listing in the UE information record with information of the UE, and maintaining the number of UE in the UE information record unchanged.

The step of deleting the information of the UE from the UE information record should preferably comprise: removing the information of the UE from the UE information record, and subtracting 1 from the number of UE in the UE information record.

Before Step C returns to Step A, Step C should preferably further comprise: the UE information record should be cleaned up.

A transmission mode switching condition should preferably even be pre-set, and before Step C returns to the Step A, Step C should further comprise:
The count result should be determined according to the number of UE in the UE information record, and if it is determined to switch transmission mode, the transmission mode in the cell should be switched according to the count result and the transmission mode switching condition.

The present invention also provides a kind of network control device to be used for counting which can help to make the network side's determination of transmission modes for MBMS service more accurate. The network control device based on the idea of the present invention consists of a storage module, a communication module and a control module, wherein:
The storage module is used to store a user equipment (UE) information record and a user number threshold in the cell;
The communication module is used to receive a notification indicating the initiation of a count from the control module, transmit the received notification, receive a response from UE, and transmit the received response to the control module;
The control module is used to transmit the notification indicating the initiation of a count to the communication module, receive UE responses from the communication module, transmit information on responding UE to the storage module, obtain the UE information record and the user number threshold in the cell from the storage module, monitor the cell where the MBMS is transmitted, inform the storage module to update the UE information record, and determine whether to trigger a recount or not according to the UE number and the user number threshold in the cell in the UE information record.

Preferably, the storage module should be further used to store count results and transmission switching conditions;
The control module is further used to transmit the count result of each recount to the storage module, obtain the count result and the transmission switching conditions from the storage module, and, when it is determined to switch the transmission mode, switch the transmission mode of the cell according to the obtained transmission mode switching conditions and the count result.

Preferably, the network control device is a radio network controller RNC or eNode B.

In the present invention, UE responding to the network side will be counted in the count and this information will be stored in the UE information record. Meanwhile, in the MBMS session, the cell where the MBMS is transmitted will be monitored, and the UE information record will be dynamically updated according to the monitoring result. A recount is triggered when the UE number in the UE information record exceeds the pre-established user number threshold in the cell. It is obvious that the statistics for UE receiving MBMS service will be used as a condition to trigger a recount in the present invention. As long as the trigger condition is met, a recount is triggered immediately, which makes it possible to reflect the number of users currently receiving MBMS service accurately and in a timely manner, enabling the network side to rapidly select the transmission mode most suitable to the present situation, effectively improving the accuracy of determining the MBMS service transmission mode while preventing the wastage of radio resources.

In the present invention, a recount is additionally triggered based on the number of users receiving MBMS service, i.e. the times that a recount is triggered is correlated to changes in the user number. During the count, if the update method includes adding UE newly added during the present count to the UE information record, the UE number in the UE information record will increase gradually to exceed the user number threshold in the cell. If the PTM transmission mode is selected when the present count is initiated, no recount is triggered when the UE number exceeds the user number threshold in the cell. During the count, if the update method includes clearing up the UE information record for each count and removing the information of the UE which meet conditions for deletion from the UE information record during monitoring, the UE number in the UE information record will not be very large and the probability of exceeding the user number threshold in the cell will decrease. In such a case, where the PTM transmission mode is adopted when the count is initiated, a recount will not be triggered when the UE number is lower than the user number threshold in the cell. Obviously, in the present invention, frequent recounts can be avoided through the reverse control of the user number in the information record; the load on the network control device will be relieved accordingly, and radio resources will be further saved.

### Explanation of the drawings

More detailed descriptions are given of the example implementations of the present invention below by making reference to the figures attached, so that normal technicians in this field can understand the above-mentioned and other characteristics and advantages of the present invention more clearly. Where:
Figure 1 is a sample flow chart for a count method based on the theory of the present invention.
Figure 2 is a flow chart for the count method in Implementation 1 of the present invention.
Figure 3 is a flow chart for the count method in Implementation 2 of the present invention.
Figure 4 is a schematic diagram of the structure of network control devices used for counting in implementations of the present invention.

### Specific implementation modes

In order to make the purpose and the technology of the present invention clearer and more understandable, a more detailed description is given below of the present invention by referring to the attached figures and providing implementation examples.

In the present invention, information on the UE responding to the count in the cell is placed on record when either the first count or a recount are initiated, while UE in the cell are monitored and the UE information record updated according to UE status.

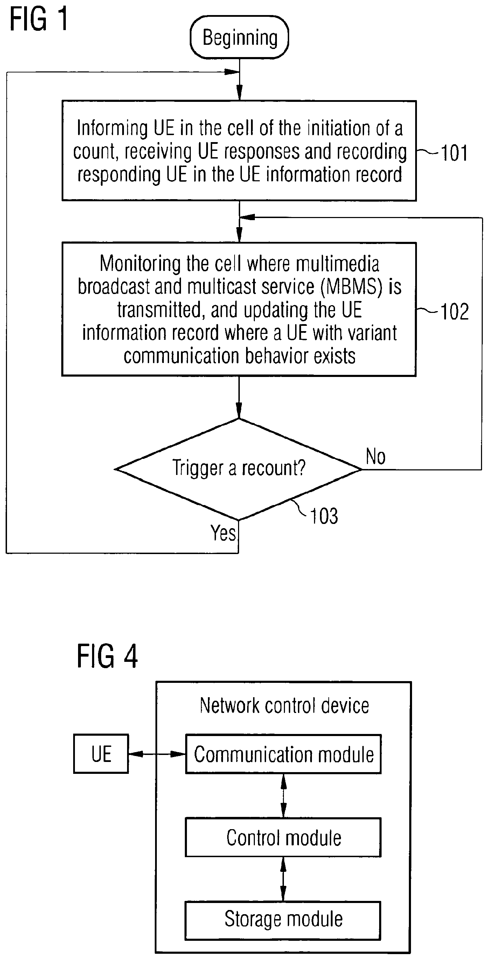

Figure 1 is a sample flow chart for the count method based on the theory of the present invention. With reference to Figure 1, it can be seen that the UE information record and the user number threshold in a cell are pre-established in the present invention; in Step 101, UE in the cell are informed of the initiation of the count, a response is received from the UE, and the responding UE are recorded in the UE information record; in Step 102, the cell is monitored and the UE information record is updated when a UE with variant communication behavior appears in the cell; in Step 103, it is determined whether a recount should be triggered or not according to the UE number in the UE information record and the pre-established user number threshold in the cell; if so, the process returns to Step 101; otherwise, it returns to Step 102.

In the present invention, the count is implemented in the interoperability between the network control device and UE. The RNTI of UE or other signs identifying UE can be recorded in the UE information record as UE information when the network control device receives a response from the UE to the count notification. Changes in communication behavior should also at least include: a UE entering or leaving the cell, powering on or off, entering or leaving the service area, and accepting or quitting the MBMS service, etc. A detailed description will be given for the present invention below.

### Implementation 1

In the present implementation, the network control device is RNC and the network side uses the PTM mode to transmit data on MBMS service at the beginning of the count.

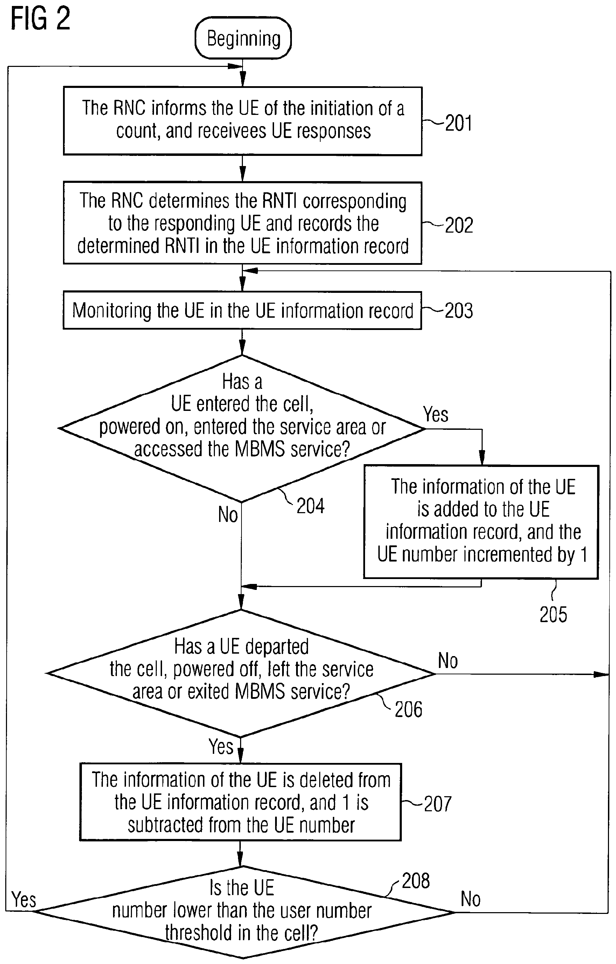

Figure 2 is a flow chart of the count method in the present implementation. With reference to Figure 2, the method includes:
In Step 201, RNC informs UE of the initiation of a count and receives the response from UE.

If it is necessary for the RNC to count UE receiving MBMS in the cell, MBMS access information is transmitted to the UE in the cell as part of this step. When any UE receiving such information is IDLE and can respond to such information, it establishes an RRC connection between itself and the network side, and responds to the MBMS access information sent by RNC through the RRC connection established. If the UE receiving the MBMS access information is in a state such as URA_PCH, CELL_PCH or CELL_FACH, and the cell of the connected mode count area in the received MBMS access information indicates that the count is suitable for such UE, the above-mentioned UE triggers the cell updating process to respond to the MBMS access information. UE in CELL_DCH state possess the exclusive physical channel assigned by the network side, and RNC can momentarily receive the MBMS information of the UE from CN through the RANAP, and thereby determine whether the UE is participating in MBMS service. Although such UE are not involved in the count, they are also included in the UE responding to the MBMS count.

In Step 202, RNC determines the RNTI corresponding to the responding UE and records the determined RNTI record in the UE information record.

In radio communication networks, RNTI represents the identifier of the UE in transmission signaling in UTRAN, SRNC, DRNC and the cell or between UE and UTRAN. In such a step, if RNC determines that the responding UE is IDLE, the UE will be switched to CELL_FACH state; once a new RNTI is assigned to the UE, the RNTI will be included in the RRC CONNECTION SETUP message and transmitted to the UE. The RNTI is then stored in the UE information record for that RNC. If RNC determines that the responding UE is in a URA_PCH, CELL_PCH or CELL_FACH state, the paging channel state of the UE will remain unchanged; when a new RNTI is assigned to the UE, the RNTI will be included in the CELL UPDATE CONFIRM message and transmitted to the UE, and it will be stored in the UE information record of that RNC. At the same time, the RNC stores the RNTI corresponding to the UE in CELL_DCH state participating in the present MBMS service in the UE information record of that RNC.

As not all UE respond to information on the initiation of a count transmitted by RNC, the UE information stored in the UE information record only includes information on UE interested in the present MBMS service.

In Steps 203∼205, the RNC monitors the cell transmitting the present MBMS service and determines whether a UE participating in the present MBMS service enters the present cell, is powered on or enters the service area, or if a UE participating in the present MBMS service appears in the cell. If so, the UE information is recorded in the UE information record, the UE number is incremented by 1, and the process proceeds to return to Step 206; otherwise, it returns to Step 206 directly.

In radio communication systems, the RNC can identify UE entering the cell by examining the process of the UE initiating a cell update or by connecting with the UE. It can also determine a UE powering on or entering the service area by examining the process whereby the UE starts establishing RRC, and determining whether the UE is participating in the present MBMS service by examining the process whereby the UE initiates the activation of the MBMS multicast service. Where the UE performs any of the above-mentioned changes in communication behavior, the UE should be regarded as a terminal that receives MBMS service data. RNC thus adds the RNTI of the UE to the UE information record; it then adds 1 to the UE number in the current UE information record.

Steps 206∼207 determine whether the UE stored in the UE information record in the cell leaves the cell, is powered off, departs from the service area or quits the present MBMS service. If so, the UE information is deleted from the UE information record, and 1 is subtracted from the UE number in the UE information record; otherwise, the process returns to Step 203.

In a similar way to when UE enters the cell, is powered on or participates in the MBMS service, RNC can identify UE leaving the cell by examining the process whereby the UE initiates an update of the cell stored in the UE information record or by connecting with the UE. It can also determine whether the UE powers off or leaves the service area by examining the process whereby the UE triggers the release of RRC, and determine if the UE is quitting the present MBMS service by examining the process whereby the UE initiates the deactivation of MBMS multicast service. If any of the above-mentioned changes occur in the communication behavior of UE in the UE information record, the UE will no longer be a terminal receiving MBMS service data. The RNC thus deletes the RNTI of the UE from the UE information record and then subtracts 1 from the UE number in the current UE information record.

Step 208 determines whether the UE number in the UE information record is lower than the pre-established user number threshold in a cell. If yes, the process returns to Step 201; otherwise, it returns to Step 203.

In the present implementation, the user threshold in the cell is pre-determined for the MBMS service so as to help the network side use the PTM mode or the PTP mode to transmit MBMS service data. When the UE number in the UE information records drops lower than the user threshold in the cell, this indicates that the UE number receiving MBMS service data in the cell is small. As this count initially uses the PTM mode, the network side must obtain accurate count results, and determine whether the PTM mode is the best current transmission mode according to the count results; RNC thus determines to trigger a recount. When the recount begins, RNC updates the UE information record. During this update, the UE number in the UE information record can be regarded as the count result of the previous count; the UE information record is deleted, and the RNTI of the responding UE is once again added to the UE information record upon receiving responses; it is also acceptable to use the UE number in the UE information record as the count result of the previous count prior to the receipt of responses, and keep the UE information record unchanged. Upon receiving the UE response, it should be determined whether the RNTI of the UE has been stored in the UE information record; if so, the UE information record should remain unchanged; otherwise, the RNTI of that UE should be added to the UE information record.

This concludes the count flow of the present implementation.

In the present implementation, the PTM mode is used when the count is initiated, and the increase in the UE number receiving MBMS service will not affect the switching of transmission modes. To prevent the UE information record from occupying too much space, the RNTI for UE entering the cell, powering on, entering the service area or for UE participating in the MBMS service can be used in Step 205 mentioned above to replace the RNTI of any UE in the UE information record. The UE number in the UE information record thus remains unchanged.

Additionally, after performing the recount, when conditions for switching the pre-determined transmission mode are met, for example where the count results of a number of continuous recounts are all lower than the user number threshold in the cell, a switch is then made to MBMS transmission mode. In the present implementation, the transmission mode should be switched from PTM mode to PTP mode.

### Implementation 2

In the present implementation, the network control device is still RNC. The present implementation differs from the previous implementation, however, in that the network side uses the PTP pattern to transmit MBMS service data when the count process begins.

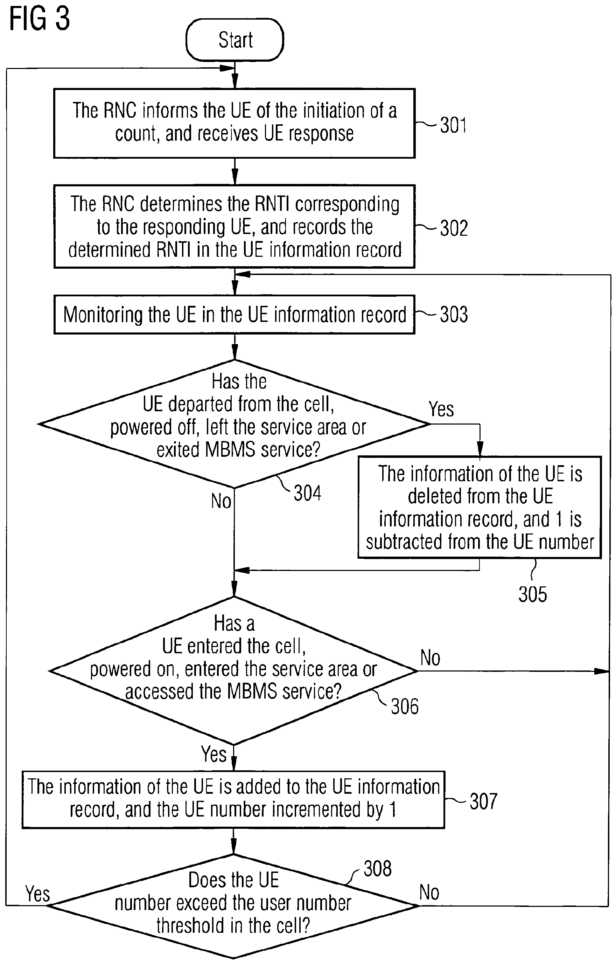

Figure 3 shows the flow of the count method in this implementation. Referring to Figure 3, this method consists of the following:
In Step 301∼302, RNC informs the UE of the initiation of a count and receives responses from the UE; RNC determines the RNTI of the responding UE and adds the determined RNTI to the UE information record.

The operations of the above-mentioned two steps are the same as those of Steps 101∼102 in Implementation 1.

In Steps 303∼305, RNC monitors the cell transmitting the present MBMS service and determines whether any UE stored in the UE information record departs from the cell, powers off, or leaves the service area, or whether the UE quits the MBMS service; if so, the information for the UE is deleted from the UE information record and 1 is subtracted from the UE number in the UE information record, and the process continues to Step 306; otherwise, Step 306 is implemented directly.

The method for determining the departure from the cell, power-off or exit from the service area of a UE, or its removal from the MBMS service, is the same as Step 204 in Implementation 1.

Steps 306∼307 determine whether a UE already participating in the MBMS service enters the cell, is powered on or enters the service area, or whether a UE not previously participating in the MBMS service accesses the MBMS service; if so, the information of the UE is added to the UE information record and the UE number is incremented by 1; otherwise, the process returns to Step 303.

The method to determine whether a UE enters the cell, is powered on or participates in the MBMS service is the same as that in Step 206 of this implementation.

Step 308 determines whether the UE number in the UE information record exceeds the pre-established user number threshold in a cell; if so, the process returns to Step 301; otherwise, it returns to Step 303.

In this implementation, a user number threshold in the cell is also pre-established for the MBMS service. When the UE number in the UE information record increases to exceed the user number threshold in a cell, this indicates that a rather large number of UE in the cell receive data on the MBMS service. As the PTP mode is used when triggering the count, the network side can directly change the transmission dialogue from PTP mode to PTM mode while informing the relevant UE. If the network side needs to obtain more accurate count results, i.e. to determine whether the count results are consistent with the actual situation while determining whether the PTP mode is the optimal current transmission mode, RNC can determine and trigger a recount. When the recount starts, RNC can perform the operations in Implementation 1 and update the UE information record, i.e. re-completing the UE information record after storing the count results for the previous count or adding the RNTI for UE newly increased in this count into the UE information record.

This concludes the count flow of the present implementation.

In the present implementation, the PTP mode is used when the count starts and a decrease in the number of UE receiving the MBMS service will not affect the switch in transmission modes. Therefore, to prevent the UE information record from occupying too much space, it is acceptable to replace the RNTI of a random UE in the UE information record with the corresponding RNTI of UE entering the cell, powering on, entering the service area or where the UE participates in the MBMS service in Step 307 above. In this case, the UE number in the UE information record will maintain unchanged.

Moreover, having performed the recount, if the conditions for switching the pre-established transmission mode are met, for example where the UE number in the UE information record always exceeds the user number threshold in a cell in a number of consecutive recounts, the MBMS transmission mode should then be switched. In the present implementation, the transmission mode will be switched from the PTP mode to the PTM mode.

The above is only an implementation using RNC as a radio network control device. In the present invention, eNode B in advanced 3G-communication systems can also act as a radio network device. In the above two implementations, UE responding to the network side are counted and recorded in the UE information record during the count. The cell transmitting the MBMS service is also monitored and the UE information record is dynamically updated according to the monitoring results during the MBMS service session. When the UE number in the UE information record exceeds the pre-determined user number threshold in a cell, a recount is triggered. Obviously, the count results for UE receiving MBMS service is used as the condition for triggering the recount in the present implementation; where the conditions for triggering a recount are satisfied, the recount is triggered immediately. It is thus possible to reflect the number of users receiving data on MBMS service in the current instance accurately and in a timely manner, and enable the network side to rapidly select a transmission mode best suited to the current situation; the accuracy in determining the transmission mode for MBMS service is effectively improved while preventing the waste of radio resources.

A recount is also triggered according to the number of users receiving data on MBMS service in the above two implementations; i.e. the number of triggered recounts is related to changes in the number of users. During the count, the UE number in the UE information record gradually increases to exceed the user number threshold in a cell if this is updated by adding newly added UE in the current count into the UE information record. If the PTM transmission mode is used when the present count is triggered, a recount will not be triggered, as the UE number exceeds the user number threshold in a cell. If this is updated by clearing the UE information record when performing a count and the method for removing UE information satisfying the conditions for deletion from the UE information record during monitoring are using during the count, no excess UE will appear in the UE information record, and the probability of exceeding the user number threshold in a cell will also decrease. Thus, where the PTP transmission mode is used when the current count is initiated, the recount is not triggered when the UE number is lower than the user number threshold in a cell. It is obvious that in the present invention, cases of frequently triggered recounts can be prevented through the inversion of control over the number of users in the information record; in turn, the load on network control devices will be relieved and radio resources will be further saved.

An example sketch map of the network control device's structure in the implementations of the present invention is demonstrated in Fig. 4 (See Fig. 4) . In the present invention, the network control device can follow the flows in Implementations 1 and 2 to interact with UE while performing a count in the MBMS service session. Specifically, the network control device consists of a storage module, a control module, and a communication module. The storage module is used to store a user equipment (UE) information record and a user number threshold in the cell; the communication module is used to receive a notification indicating the start of a count from the control module, transmit the received notification, receive responses from the UE, and transmit the received responses to the control module; the control module is used to transmit the notification indicating the start of a count to the communication module, receive the responses from the UE from the communication module, transmit information on responding UE to the storage module, obtain the UE information record and the user number threshold in the cell from the storage module, monitor the cell where the MBMS is transmitted, inform the storage module to update the UE information record, and determine whether to trigger a recount or not according to the UE number and the user number threshold in the cell in the UE information record.

Furthermore, in the present implementation, the storage module stores count results and transmission switching conditions; the control module is further used to transmit the count result of each recount to the storage module, to obtain the count result and the transmission switching conditions from the storage module, and, when it is determined to switch the transmission mode, switch the transmission mode of the cell according to the obtained transmission mode switching conditions and the count result. In actual applications, the network control device in the present implementation can be a radio network controller RNC, eNode B, or other network entity that can perform a count.

The above are only relatively reasonable implementations of the present invention, and should not be used to impose restrictions on the present invention. Any modification, equivalent and replacement, improvement etc. within the principle of the present invention shall be included in the extent of protection for the present invention.

## Claims

1. A counting method, which pre-establishes a user equipment (UE) information record and a user number threshold in a cell, comprising:
A. informing UEs in the cell where multimedia broadcast and multicast service (MBMS) is transmitted about beginning to count, receiving a response from the UEs, and recording the responded UE record into the UE information record;
B. monitoring the cell, and updating the UE information record when determining the existence of a UE in the cell having a varied communication behavior;
C. determining whether to trigger a re-counting or not according to the UE number and the user number threshold in the cell in the UE information record, and if yes, returning to Step A; otherwise, returning to Step B, **characterized in that**
in Step A of informing UEs in the cell where the MBMS is transmitted about beginning to count, the cell adopts a peer to peer (PTP) transmission mode, and accordingly, Step B of updating the UE information record when determining the existence of the UE having a varied communication behavior in the cell comprises:
B21. determining whether the situation that the UE stored in the UE information record departs from the cell, is powered off, or leaves away from the service area or that the UE quits from the MBMS service exists or not, and if yes, determining the existence of the UE having a varied communication behavior in the cell, deleting the information of the UE from the UE information record, and continuing to perform Step B22, otherwise, performing the Step B22 directly,
B22. determining whether the situation that the UE already participated in the MBMS service enters the cell, is powered on, or enters the service area or that the UE participates in the MBMS service exists or not, and if yes, determining the UE having a varied communication behavior in the cell, and adding the information of the UE into the UE information record; otherwise, determining that no UEs with a varied communication behavior exist in the cell;
and **in that** Step C of determining whether to trigger a recounting or not according to the UE number and the user number threshold in the cell in the UE information record comprises:
determining whether the UE number in the UE information record is greater than the user number threshold in the cell, and if yes, determining to trigger a recounting; otherwise, determining not to trigger a recounting..

2. The method as claimed in claim 1, wherein Step A of recording the responded UE record into the UE information record comprises:
determining a channel state of the responded UE, and allocating an identification for the UE if the UE is at a state of universal mobile telecommunication system (UMTS) universal terrestrial radio access network (UTRAN) registration area paging channel URA_PCH, at a state of cell paging channel CELL_PCH or at a state of cell forward access channel CELL_FACH, and acquiring an identification corresponding to the UE from the outside if the UE is at a state of cell dedicated channel;
recording the identification of the responded UE into the UE information record as a UE information.

3. The method as claimed in claim 2, before the step of recording the identification of the responded UE into the UE information record as a UE information, further comprising:
determining whether an identification of the UE exists in the UE information record or not, and if yes, performing Step B, otherwise, performing the operation of recording the identification into the UE information record.

4. The method as claimed in claim 1, wherein in Step A of informing UEs in the cell where the MBMS is transmitted about beginning to count, the cell adopts a peer to multi peer (PTM) transmission mode, and accordingly, Step B of updating the UE information record when determining the existence of a UE having a varied communication behavior comprises:
B11. determining whether the situation that the UE already participated in the MBMS service enters the cell, is powered on, or enters the service area or that the UE participates in the MBMS service exists or not, and if yes, determining the existence of a UE having a varied communication behavior, adding the information of the UE into the UE information record, and continuing to perform Step B12; otherwise, performing Step B12 directly;
B12. determining whether the situation that the UE in the cell stored in the UE information record departs from the cell, is powered off, or leaves the service area or that the UE quits from the MBMS service exists or not, and if yes, determining the UE having a varied communication behavior in the cell, and deleting the information of the UE from the UE information record; otherwise, determining that no UEs have a varied communication behavior in the cell.

5. The method as claimed in claim 4, wherein Step C of determining whether to trigger a recounting or not according to the UE number and the user number threshold in the cell in the UE information record comprises:
determining whether the UE number in the UE information record is smaller than the user number threshold in the cell, and if yes, determining to trigger a recounting; otherwise, determining not to trigger a recounting.

6. The method as claimed in claim 4, wherein the step of adding the information of the UE into the UE information record comprises:
adding the information of the UE into the UE information record as a new item, and adding 1 to the number of the UEs in the UE information record.

7. The method as claimed in claim 4, wherein the step of adding the information of the UE into the UE information record comprises:
replacing a UE information in the UE information record with the information of the UE, and maintaining the number of the UEs in the UE information record to be unchanged.

8. The method as claimed in claim 4, wherein the step of deleting the information of the UE from the UE information record comprises:
removing the information of the UE from the UE information record, and subtracting 1 from the number of the UEs in the UE information record.

9. The method as claimed in claim 1, wherein before Step C of returning to Step A, Step C further comprises: cleaning up the UE information record.

10. The method as claimed in claim 1, wherein a transmission mode switching condition is pre-set, and before Step C of returning to the Step A, Step C further comprises:
determining the counting result according to the number of the UEs in the UE information record, and switching the transmission mode in the cell when determining to switch a transmission mode according to the counting result and the transmission mode switching condition.

11. A network control device for counting operation, comprising: a storage module, a communication module, and a control module, wherein the storage module is used to store a user equipment (UE) information record and a user number threshold in the cell;
the communication module is used to receive a notification indicating the beginning of the counting from the control module, send out the received notification, receive a response from the UE, and send the received response to the control module;
the control module is used to send the notification indicating the beginning of the counting to the communication module, receive the response from the UE from the communication module, send information of the responded UE to the storage module, obtain the UE information record and the user number threshold in the cell from the storage module, monitor the cell where the MBMS is transmitted, inform the storage module to update the UE information record, and determine whether to trigger a recounting or not according to the UE number and the user number threshold in the cell in the UE information record,
**characterized in that**
in informing UEs in the cell where the MBMS is
transmitted about beginning to count, the cell adopts a peer to peer (PTP) transmission mode, and accordingly, updating the UE information record when determining the existence of the UE having a varied communication behavior in the cell comprises:
determining whether the situation that the UE stored in the UE information record departs from the cell, is powered off, or leaves away from the service area or that the UE quits from the MBMS service exists or not, and if yes, determining the existence of the UE having a varied communication behavior in the cell, deleting the information of the UE from the UE information record, and continuing to perform
determining whether the situation that the UE already
participated in the MBMS service enters the cell, is powered on, or enters the service area or that the UE participates in the MBMS service exists or not, and if yes, determining the UE having a varied communication behavior in the cell, and adding the information of the UE into the UE information record; otherwise, determining that no UEs with a varied communication behavior exist in the cell;
and **in that** in determining whether to trigger a recounting or not according to the UE number and the user number threshold in the cell in the UE information record comprises:
determining whether the UE number in the UE information record is greater than the user number threshold in the cell, and if yes,
determining to trigger a recounting; otherwise, determining not to trigger a recounting.

12. The device as claimed in claim 11, wherein the storage module is further used to store counting results and transmission switching conditions,
the control module is further used to send the counting result of each recounting to the storage module, obtain the counting result and the transmission switching conditions from the storage module, and switch the transmission mode of the cell when determining to switch a transmission mode according to the obtained transmission mode switching conditions and the counting result.

13. The device as claimed in claim 11, wherein the network control device is a radio network controller RNC or eNode B.

## Patentansprüche

1. Zählverfahren, das einen Anwendergerät-Informationsdatensatz (UE-Informationsdatensatz) und einen Anwenderanzahl-Schwellenwert in einer Zelle im Voraus festlegt, das Folgendes umfasst:
A. Informieren der UEs in der Zelle, in der ein Multimedia-Rundsende- und Gruppenrufdienst (MBMS) übertragen wird, über den Beginn des Zählens, Empfangen einer Antwort von den UEs und Aufzeichnen des beantworteten UE-Datensatzes in dem UE-Informationsdatensatz;
B. Überwachen der Zelle und Aktualisieren des UE-Informationsdatensatzes, wenn das Vorhandensein eines UE in der Zelle mit einem veränderten Kommunikationsverhalten bestimmt wird;
C. Bestimmen gemäß der UE-Anzahl und dem Anwenderanzahl-Schwellenwert in der Zelle in dem UE-Informationsdatensatz, ob ein erneutes Zählen auszulösen ist oder nicht, und, wenn ja, Zurückkehren zum Schritt A; andernfalls Zurückkehren zum Schritt B, **dadurch gekennzeichnet, dass**
im Schritt A des Informierens der UEs in der Zelle, in der der MBMS übertragen wird, über den Beginn des Zählens die Zelle einen Peer-zu-Peer-Übertragungsmodus (PTP-Übertragungsmodus) anwendet und entsprechend der Schritt B des Aktualisierens des UE-Informationsdatensatzes, wenn das Vorhandensein des UE mit einem veränderten Kommunikationsverhalten in der Zelle bestimmt wird, Folgendes umfasst:
B21. Bestimmen, ob die Situation, dass sich das UE, das in dem UE-Informationsdatensatz gespeichert ist, von der Zelle entfernt, ausgeschaltet ist oder den Dienstbereich verlässt oder dass das UE den MBMS-Dienst beendet, vorhanden ist oder nicht, und, wenn ja, Bestimmen des Vorhandenseins des UE mit einem geänderten Kommunikationsverhalten in der Zelle, Löschen der Informationen des UE aus dem UE-Informationsdatensatz und Fortsetzen des Ausführens des Schritts B22, andernfalls Ausführen des Schrittes B22 direkt,
B22. Bestimmen, ob die Situation, dass das UE, das bereits an dem MBMS-Dienst teilnimmt, in die Zelle eintritt, eingeschaltet ist oder in den Dienstbereich eintritt oder dass das UE an dem MBMS-Dienst teilnimmt, vorhanden ist oder nicht, und, wenn ja, Bestimmen des UE mit einem geänderten Kommunikationsverhalten in der Zelle und Hinzufügen der Informationen des UE in den UE-Informationsdatensatz; andernfalls Bestimmen, dass keine UEs mit einem geänderten Kommunikationsverhalten in der Zelle vorhanden sind;
und dass der Schritt C des Bestimmens gemäß der UE-Anzahl und dem Anwenderanzahl-Schwellenwert in der Zelle in dem UE-Informationsdatensatz, ob ein erneutes Zählen auszulösen ist oder nicht, Folgendes umfasst:
Bestimmen, ob die UE-Anzahl in dem UE-Informationsdatensatz größer als der Anwenderanzahl-Schwellenwert in der Zelle ist, und, wenn ja, Bestimmen, ein erneutes Zählen auszulösen; andernfalls Bestimmen, ein erneutes Zählen nicht auszulösen.

2. Verfahren nach Anspruch 1, wobei der Schritt A des Aufzeichnens des beantworteten UE-Datensatzes in dem UE-Informationsdatensatz Folgendes umfasst:
Bestimmen eines Kanalzustands des antwortenden UE und Zuweisen einer Kennung für das UE, falls sich das UE in einem Zustand eines Registrierungsbereichs-Funkrufkanals des universellen terrestrischen Funkzugangsnetzes (UTRAN) URA_PCH des universellen Mobiltelekommunikationssystems (UMTS), in einem Zustand eines Zellen-Funkrufkanals CELL_PCH oder in einem Zustand eines Zellen-Weiterleitungszugangskanals CELL_FACH befindet, und Erfassen einer Kennung, die dem UE entspricht, von außerhalb, falls sich das UE in einem Zustand eines dedizierten Kanals der Zelle befindet;
Aufzeichnen der Kennung des antwortenden UE in dem UE-Informationsdatensatz als die UE-Informationen.

3. Verfahren nach Anspruch 2, das vor dem Schritt des Aufzeichnens der Kennung des antwortenden UE in dem UE-Informationsdatensatz als die UE-Informationen ferner Folgendes umfasst:
Bestimmen, ob eine Kennung des UE in dem UE-Informationsdatensatz vorhanden ist oder nicht, und, wenn ja, Ausführen des Schrittes B, andernfalls Ausführen der Operation des Aufzeichnens der Identifikation in dem UE-Informationsdatensatz.

4. Verfahren nach Anspruch 1, wobei im Schritt A des Informierens der UEs in der Zelle, in der der MBMS übertragen wird, über den Beginn des Zählens die Zelle einen Peer-zu-Multi-Peer-Übertragungsmodus (PTM-Übertragungsmodus) anwendet und entsprechend der Schritt B des Aktualisierens des UE-Informationsdatensatzes, wenn das Vorhandensein eines UE mit einem geänderten Kommunikationsverhalten bestimmt wird, Folgendes umfasst:
B11. Bestimmen, ob die Situation, dass das UE, das bereits an dem MBMS-Dienst teilnimmt, in die Zelle eintritt, eingeschaltet ist oder in den Dienstbereich eintritt oder dass das UE an dem MBMS-Dienst teilnimmt, vorhanden ist oder nicht, und, wenn ja, Bestimmen des Vorhandenseins eines UE mit einem geänderten Kommunikationsverhalten, Hinzufügen der Informationen des UE in den UE-Informationsdatensatz und Fortsetzen des Ausführens des Schrittes B12; andernfalls Ausführen des Schrittes B12 direkt;
B12. Bestimmen, ob die Situation, dass das UE in der Zelle, das in dem UE-Informationsdatensatz gespeichert ist, sich von der Zelle entfernt, ausgeschaltet ist oder den Dienstbereich verlässt oder dass das UE den MBMS-Dienst beendet, vorhanden ist oder nicht, und, wenn ja, Bestimmen des UE mit einem geänderten Kommunikationsverhalten in der Zelle und Löschen der Informationen des UE aus dem UE-Informationsdatensatz; andernfalls Bestimmen, dass keine UEs ein geändertes Kommunikationsverhalten in der Zelle aufweisen.

5. Verfahren nach Anspruch 4, wobei der Schritt C des Bestimmens gemäß der UE-Anzahl und dem Anwenderanzahl-Schwellenwert in der Zelle in dem UE-Informationsdatensatz, ob ein erneutes Zählen auszulösen ist oder nicht, Folgendes umfasst:
Bestimmen, ob die UE-Anzahl in dem UE-Informationsdatensatz kleiner als der Anwenderanzahl-Schwellenwert in der Zelle ist, und, wenn ja, Bestimmen, ein erneutes Zählen auszulösen; andernfalls Bestimmen, ein erneutes Zählen nicht auszulösen.

6. Verfahren nach Anspruch 4, wobei der Schritt des Hinzufügens der Informationen des UE in den UE-Informationsdatensatz Folgendes umfasst:
Hinzufügen der Informationen des UE in den UE-Informationsdatensatz als einen neuen Punkt und Addieren von 1 zu der Anzahl der UEs in dem UE-Informationsdatensatz.

7. Verfahren nach Anspruch 4, wobei der Schritt des Hinzufügens der Informationen des UE in den UE-Informationsdatensatz Folgendes umfasst:
Ersetzen der UE-Informationen in dem UE-Informationsdatensatz durch die Informationen des UE und Aufrechterhalten der unveränderten Anzahl der UEs in dem UE-Informationsdatensatz.

8. Verfahren nach Anspruch 4, wobei der Schritt des Löschens der Informationen des UE aus dem UE-Informationsdatensatz Folgendes umfasst:
Entfernen der Informationen des UE aus dem UE-Informationsdatensatz und Subtrahieren von 1 von der Anzahl der UEs in dem UE-Informationsdatensatz.

9. Verfahren nach Anspruch 1, wobei vor dem Schritt C des Zurückkehrens zum Schritt A der Schritt C ferner Folgendes umfasst: Bereinigen des UE-Informationsdatensatzes.

10. Verfahren nach Anspruch 1, wobei eine Übertragungsmodus-Wechselbedingung voreingestellt ist und vor dem Schritt C des Zurückkehrens zum Schritt A der Schritt C ferner Folgendes umfasst:
Bestimmen des Zählergebnisses gemäß der Anzahl der UEs in dem UE-Informationsdatensatz und Wechseln des Übertragungsmodus in der Zelle, wenn gemäß dem Zählergebnis und der Übertragungsmodus-Wechselbedingung bestimmt wird, einen Übertragungsmodus zu wechseln.

11. Netzsteuervorrichtung für eine Zähloperation, die Folgendes umfasst: ein Speichermodul, ein Kommunikationsmodul und ein Steuermodul, wobei
das Speichermodul verwendet wird, um einen Anwendergerät-Informationsdatensatz (UE-Informationsdatensatz) und einen Anwenderanzahl-Schwellenwert in der Zelle zu speichern;
das Kommunikationsmodul verwendet wird, um eine Meldung, die den Beginn des Zählens angibt, von dem Steuermodul zu empfangen, die empfangene Meldung auszusenden, eine Antwort von dem UE zu empfangen und die empfangene Antwort an das Steuermodul zu senden;
das Steuermodul verwendet wird, um die Meldung, die den Beginn des Zählens angibt, an das Kommunikationsmodul zu senden, die Antwort von dem UE von dem Kommunikationsmodul zu empfangen, die Informationen des antwortenden UE an das Speichermodul zu senden, den UE-Informationsdatensatz und den Anwenderanzahl-Schwellenwert in der Zelle von dem Speichermodul zu empfangen, die Zelle, in der der MBMS übertragen wird, zu überwachen, das Speichermodul zu informieren, den UE-Informationsdatensatz zu aktualisieren, und gemäß der UE-Anzahl und dem Anwenderanzahl-Schwellenwert in der Zelle in dem UE-Informationsdatensatz zu bestimmen, ob ein erneutes Zählen auszulösen ist oder nicht,
**dadurch gekennzeichnet, dass**
beim Informieren der UEs in der Zelle, in der der MBMS übertragen wird, über den Beginn des Zählens die Zelle einen Peer-zu-Peer-Übertragungsmodus (PTP-Übertragungsmodus) anwendet und entsprechend das Aktualisieren des UE-Informationsdatensatzes, wenn das Vorhandensein des UE mit einem geänderten Kommunikationsverhalten in der Zelle bestimmt wird, Folgendes umfasst:
Bestimmen, ob die Situation, dass das UE, das in dem UE-Informationsdatensatz gespeichert ist, sich von der Zelle entfernt, ausgeschaltet ist oder den Dienstbereich verlässt oder dass das UE den MBMS-Dienst beendet, vorhanden ist oder nicht, und, wenn ja, Bestimmen des Vorhandenseins des UE mit einem geänderten Kommunikationsverhalten in der Zelle, Löschen der Informationen des UE aus dem UE-Informationsdatensatz und Fortsetzen des Ausführens des Bestimmens, ob die Situation, dass das UE, das bereits an dem MBMS-Dienst teilnimmt, in die Zelle eintritt, eingeschaltet ist oder in den Dienstbereich eintritt oder dass das UE an dem MBMS-Dienst teilnimmt, vorhanden ist oder nicht, und, wenn ja, Bestimmen des UE mit einem geänderten Kommunikationsverhalten in der Zelle und Hinzufügen der Informationen des UE in den UE-Informationsdatensatz; andernfalls Bestimmen, dass keine UEs mit einem geänderten Kommunikationsverhalten in der Zelle vorhanden sind;
und dass das Bestimmen gemäß der UE-Anzahl und dem Anwenderanzahl-Schwellenwert in der Zelle in dem UE-Informationsdatensatz, ob ein erneutes Zählen auszulösen ist oder nicht, Folgendes umfasst:
Bestimmen, ob die UE-Anzahl in dem UE-Informationsdatensatz größer als der Anwenderanzahl-Schwellenwert in der Zelle ist, und, wenn ja, Bestimmen, ein erneutes Zählen auszulösen; andernfalls Bestimmen, ein erneutes Zählen nicht auszulösen.

12. Vorrichtung nach Anspruch 11, wobei das Speichermodul ferner verwendet wird, um die Zählergebnisse und die Übertragungswechselbedingungen zu speichern,
das Steuermodul ferner verwendet wird, um das Zählergebnis jedes erneuten Zählens an das Speichermodul zu senden, das Zählergebnis und die Übertragungswechselbedingungen von dem Speichermodul zu erhalten und den Übertragungsmodus der Zelle zu wechseln, wenn gemäß den erhaltenen Übertragungsmodus-Wechselbedingungen und dem Zählergebnis bestimmt wird, den Übertragungsmodus zu wechseln.

13. Vorrichtung nach Anspruch 11, wobei die Netzsteuervorrichtung ein Funknetz-Controller RNC oder ein eNode B ist.

## Revendications

1. Procédé de comptage, qui préétablit un enregistrement d'informations d'équipement utilisateur (UE) et un seuil du nombre d'utilisateurs dans une cellule, comprenant les étapes suivantes :
A. informer des UE dans la cellule où le service de diffusion multimédia et de multidiffusion (MBMS) est transmis concernant le commencement d'un comptage, la réception d'une réponse des UE, et l'enregistrement de l'enregistrement d'UE qui a été répondu dans l'enregistrement d'informations d'UE ;
B. surveiller la cellule, et mettre à jour l'enregistrement d'informations d'UE lors de la détermination de l'existence d'un UE dans la cellule ayant un comportement de communication qui varie ;
C. déterminer s'il convient de déclencher un nouveau comptage ou non en fonction du nombre d'UE et du seuil du nombre d'utilisateurs dans la cellule dans l'enregistrement d'informations d'UE et, si oui, retourner à l'étape A ; dans le cas contraire, retourner à l'étape B, **caractérisé en ce que** :
à l'étape A comprenant d'informer les UE dans la cellule où le MBMS est transmis concernant un commencement du comptage, la cellule adopte un mode de transmission de pair à pair (PTP) et, en conséquence, l'étape B comprenant de mettre à jour l'enregistrement d'informations d'UE lors de la détermination de l'existence de l'UE ayant un comportement de communication qui varie dans la cellule comprend les étapes suivantes :
B21. déterminer si la situation dans laquelle l'UE qui est stocké dans l'enregistrement d'informations d'UE s'écarte de la cellule, est hors tension, ou quitte la zone de service, ou dans laquelle l'UE quitte le service MBMS existe, ou non et, si oui, déterminer l'existence de L'UE ayant un comportement de communication qui varie dans la cellule, supprimer les informations de l'UE de l'enregistrement d'informations d'UE, et continuer à exécuter l'étape B22, sinon, exécuter l'étape B22 directement,
B22. déterminer si la situation dans laquelle l'UE qui participe déjà au service MBMS pénètre dans la cellule, est sous tension, ou pénètre dans la zone de service, ou dans laquelle l'UE participe au service MBMS existe, ou non et, si oui, déterminer que l'UE a un comportement de communication qui varie dans la cellule, et ajouter les informations de l'UE dans l'enregistrement d'informations d'UE ; sinon, déterminer qu'aucun UE ayant un comportement de communication qui varie n'existe dans la cellule ;
et **en ce que** l'étape C comprenant de déterminer s'il convient de déclencher un recomptage ou non en fonction du nombre d'UE et du seuil du nombre d'utilisateurs dans la cellule dans l'enregistrement d'informations d'UE comprend les étapes suivantes :
déterminer si le nombre d'UE dans l'enregistrement d'informations d'UE est supérieur au seuil du nombre d'utilisateurs dans la cellule et, si oui, déterminer de déclencher un recomptage ; sinon, déterminer de ne pas déclencher de recomptage.

2. Procédé tel que revendiqué dans la revendication 1, dans lequel l'étape A comprenant d'enregistrer l'enregistrement d'UE qui a répondu dans l'enregistrement d'informations d'UE comprend les étapes suivantes :
déterminer un état de canal de l'UE qui a répondu, et allouer une identification pour l'UE si l'UE est dans un état de canal de messagerie de zone d'enregistrement URA_PCH de réseau d'accès radio terrestre universel (UTRAN) de système de télécommunication mobile universel (UMTS), dans un état de canal de messagerie cellulaire CELL_PCH ou dans un état de canal d'accès vers l'avant cellulaire CELL_FACH, et acquérir une identification correspondant à l'UE depuis l'extérieur si l'UE est dans un état de canal dédié de cellule ;
enregistrer l'identification de l'UE qui a répondu dans l'enregistrement d'informations d'UE en tant qu'informations d'UE.

3. Procédé tel que revendiqué dans la revendication 2, comprenant en outre, avant l'étape comprenant d'enregistrer l'identification de l'UE qui a répondu dans l'enregistrement d'informations d'UE en tant qu'informations d'UE, les étapes suivantes :
déterminer si une identification de l'UE existe dans l'enregistrement d'informations d'UE, ou non, et, si oui, exécuter l'étape B, sinon, exécuter l'opération d'enregistrement de l'identification dans l'enregistrement d'informations d'UE.

4. Procédé tel que revendiqué dans la revendication 1, dans lequel, à l'étape A comprenant d'informer les UE dans la cellule où le service MBMS est transmis concernant le commencement d'un comptage, la cellule adopte un mode de transmission de pair à pairs multiples (PTM), et, en conséquence, l'étape B comprenant de mettre à jour l'enregistrement d'informations d'UE lors de la détermination de l'existence d'un UE ayant un comportement de communication qui varie comprend les étapes suivantes :
B11. déterminer si la situation dans laquelle l'UE qui participe déjà au service MBMS pénètre dans la cellule, est mis sous tension, ou entre dans la zone de service, ou dans laquelle l'UE participe au service MBMS existe,
ou non et, si oui, déterminer l'existence d'un UE ayant un comportement de communication qui varie, ajouter les informations de l'UE dans l'enregistrement d'informations d'UE, et continuer à exécuter l'étape B12 ; sinon, exécuter l'étape B12 directement ;
B12. déterminer si la situation dans laquelle l'UE de la cellule stocké dans l'enregistrement d'informations d'UE s'écarte de la cellule, est hors tension ou quitte la zone de service ou si la situation dans laquelle l'UE quitte le service MBMS existe ou non et, si oui, déterminer que l'UE a un comportement de communication qui varie dans la cellule, et supprimer les informations de l'UE de l'enregistrement d'informations d'UE ; sinon, déterminer qu'aucun UE n'a un comportement de communication qui varie dans la cellule.

5. Procédé tel que revendiqué dans la revendication 4, dans lequel l'étape C comprenant de déterminer s'il convient de déclencher un recomptage ou non en fonction du nombre d'UE et du seuil du nombre d'utilisateurs dans la cellule dans l'enregistrement d'informations d'UE comprend les étapes suivantes :
déterminer si le nombre d'UE dans l'enregistrement d'informations d'UE est inférieur au seuil du nombre d'utilisateurs dans la cellule et, si oui, déterminer de déclencher un recomptage ; sinon, déterminer de ne pas déclencher un recomptage.

6. Procédé tel que revendiqué dans la revendication 4, dans lequel l'étape comprenant d'ajouter les informations de l'UE dans l'enregistrement d'informations d'UE comprend les étapes suivantes :
ajouter les informations de l'UE dans l'enregistrement d'informations d'UE en tant que nouvel élément, et
ajouter 1 au nombre des UE dans l'enregistrement d'informations d'UE.

7. Procédé tel que revendiqué dans la revendication 4, dans lequel l'étape comprenant d'ajouter les informations de l'UE dans l'enregistrement d'informations d'UE comprend les étapes suivantes :
remplacer une information d'UE dans l'enregistrement d'informations d'UE par l'information de l'UE, et garder inchangé le nombre des UE dans l'enregistrement d'informations d'UE.

8. Procédé tel que revendiqué dans la revendication 4, dans lequel l'étape de suppression des informations de l'UE de l'enregistrement d'informations d'UE comprend les étapes suivantes :
retirer les informations de l'UE de l'enregistrement d'informations d'UE, et soustraire 1 du nombre des UE dans l'enregistrement d'informations d'UE.

9. Procédé tel que revendiqué dans la revendication 1, dans lequel, avant l'étape C comprenant de retourner à l'étape A, l'étape C comprend en outre de nettoyer l'enregistrement d'informations d'UE.

10. Procédé tel que revendiqué dans la revendication 1, dans lequel une condition de changement de mode de transmission est préétablie et, avant l'étape C comprenant de revenir à l'étape A, l'étape C comprend en outre les étapes suivantes :
déterminer le résultat de comptage en fonction du nombre d'UE dans l'enregistrement d'informations d'UE et changer le mode de transmission dans la cellule lorsqu'il est déterminé de changer le mode de transmission en fonction du résultat de comptage et de la condition de changement de mode de transmission.

11. Dispositif de commande de réseau destiné à une opération de comptage, comprenant : un module de stockage, un module de communication, et un module de commande, où le module de stockage est utilisé pour stocker un enregistrement d'informations d'équipement utilisateur (UE) et un seuil du nombre d'utilisateurs dans la cellule ;
le module de communication est utilisé pour recevoir une notification indiquant le commencement du comptage depuis le module de commande, envoyer la notification reçue, recevoir une réponse de l'UE, et envoyer la réponse reçue au module de commande ;
le module de commande est utilisé pour envoyer la notification indiquant le commencement du comptage au module de communication, recevoir la réponse de l'UE depuis le module de communication, envoyer les informations de l'UE qui a répondu au module de stockage, obtenir l'enregistrement d'informations d'UE et le seuil du nombre d'utilisateurs dans la cellule depuis le module de stockage, surveiller la cellule dans laquelle le service MBMS est transmis, indiquer au module de stockage de mettre à jour l'enregistrement d'informations d'UE, et déterminer s'il convient de déclencher un recomptage ou non en fonction du nombre d'UE et du seuil du nombre d'utilisateurs dans la cellule dans l'enregistrement d'informations d'UE,
**caractérisé en ce que**
en informant les UE dans la cellule où le service MBMS est transmis concernant le commencement du comptage, la cellule adopte un mode de transmission de pair à pair (PTP) et, en conséquence, la mise à jour de l'enregistrement d'informations d'UE lors de la détermination de l'existence de l'UE ayant un comportement de communication qui varie dans la cellule comprend les étapes suivantes :
déterminer si la situation dans laquelle l'UE qui est stocké dans l'enregistrement d'informations d'UE s'écarte de la cellule, est hors tension, ou quitte la zone de service, ou dans laquelle l'UE quitte le service MBMS existe ou non, et, si oui, déterminer l'existence de l'UE ayant un comportement de communication qui varie dans la cellule, supprimer les informations de l'UE de l'enregistrement d'informations d'UE, et continuer à déterminer si la situation dans laquelle l'UE qui participe déjà au service MBMS pénètre dans la cellule, est sous tension, ou pénètre dans la zone de service, ou dans laquelle l'UE participe au service MBMS existe, ou non et, si oui, déterminer que l'UE a un comportement de communication qui varie dans la cellule, et ajouter les informations de l'UE dans l'enregistrement d'informations d'UE ; sinon, déterminer qu'aucun UE ayant un comportement de communication qui varie n'existe dans la cellule ;
et **en ce que** déterminer s'il convient de déclencher un recomptage ou non en fonction du nombre d'UE et du seuil du nombre d'utilisateurs dans la cellule dans l'enregistrement d'informations d'UE comprend les étapes suivantes :
déterminer si le nombre d'UE dans l'enregistrement d'informations d'UE est supérieur au seuil du nombre d'utilisateurs dans la cellule et, si oui, déterminer de déclencher un recomptage ; sinon, déterminer de ne pas déclencher de recomptage.

12. Dispositif tel que revendiqué dans la revendication 11, dans lequel le module de stockage est en outre utilisé pour stocker des résultats de comptage et des conditions de changement de transmission,
le module de commande est en outre utilisé pour envoyer le résultat de comptage ade chaque recomptage au module de stockage, obtenir le résultat de comptage ainsi que les conditions de changement de transmission depuis le module de stockage, et changer le mode de transmission de la cellule lorsqu'il est déterminé de changer un mode de transmission en fonction des conditions de changement de mode de transmission obtenues et du résultat de comptage.

13. Dispositif tel que revendiqué dans la revendication 11, dans lequel le dispositif de commande de réseau est un contrôleur de réseau radio RNC ou un noeud B évolué.
